# EUROPEAN PATENT SPECIFICATION

(11) **EP 2 955 332 B1**
(45) Date of publication and mention of the grant of the patent: **06.11.2019**
(21) Application number: 15171362.5
(22) Date of filing: 10.06.2015
(51) Int. Cl.: F01D 11/02, F01D 25/16, F01D 25/18, F02K 3/06, F02C 3/107

(54) **GEARED TURBOFAN ENGINE WITH GEARBOX SEAL**
GETRIEBEDICHTUNG EINES GASTURBINENMOTORS MIT GETRIEBE-FAN
MOTEUR À DOUBLE FLUX À ENGRENAGES AVEC JOINT DE BOÎTE DE VITESSES

(30) Priority: 11.06.2014 US 201462010486 P
(43) Date of publication of application: 16.12.2015
(73) Proprietor: United Technologies Corporation, Farmington, CT 06032 (US)
(72) Inventor: SHERIDAN, William G., Southington, CT Connecticut 06489 (US); SCHWARTZ, Frederick M., Glastonbury, CT Connecticut 06033 (US)
(74) Representative: Dehns

(56) References cited:
- EP-A1- 1 890 054
- EP-A2- 1 887 199
- EP-A2- 1 936 123
- WO-A1-2014/022396

## Description

### BACKGROUND OF THE INVENTION

This application relates to a geared turbofan having unique seals at at least one bearing compartment.

Gas turbine engines are known, and typically include a fan rotor delivering air into a bypass duct as propulsion air. Air is also delivered into a compressor as core airflow. The air in the compressor is compressed and delivered into a combustion section where it is mixed with fuel and ignited. Products of this combustion pass downstream over turbine rotors driving them to rotate.

Historically, the fan rotor rotated at a single speed with a fan drive turbine. This limited the speed of the fan drive turbine, as the fan rotor speed was constrained by a number of factors. More recently, it has been proposed to include a gear reduction between the fan rotor and the fan drive turbine.

There are a number of bearing compartments in a geared gas turbine engine. It is important to seal each bearing compartment by having a seal at each axial end. The seals ensure that oil does not leak outwardly of the bearing compartment and may receive a supply of pressurized air at an opposed side to resist the flow of oil across the seal.

While brush seals and labyrinth seals have been proposed at a number of locations in direct drive gas turbine engines, they have not been proposed in a geared gas turbine engine.

EP 1 887 199 A2 discloses a prior art gas turbine engine according to the preamble of claim 1.

EP 1 936 123 A2 discloses a prior art oil scavenge system for a gas turbine engine.

EP 1 890 054 A1 discloses a prior art ring gear mounting arrangement with oil scavenge scheme.

### SUMMARY OF THE INVENTION

According to the present invention, there is provided a gas turbine engine as set forth in claim 1.

In another embodiment according to the above embodiment, the seal is a labyrinth seal having a plurality of knife edges.

In another embodiment according to any of the previous embodiments, a first radius is defined to a radial extent of the knife edges and a second radius may be defined on a drive shaft associated with the fan drive turbine at a location in a plane defined by a fuel nozzle in a combustor in the gas turbine engine. A diameter ratio of the first radius to the second radius is less than or equal to about 2.0.

In another embodiment according to any of the previous embodiments, the diameter radius is less than or equal to about 1.75.

In another embodiment according to any of the previous embodiments, the at least one bearing compartment further comprises a bearing compartment associated with a compressor rotor.

In another embodiment according to any of the previous embodiments, the at least one bearing compartment further comprises a bearing compartment associated with a turbine rotor in the turbine section.

In another embodiment according to any of the previous embodiments, the seal is a brush seal.

In another embodiment according to any of the previous embodiments, the gear reduction has a gear ratio greater than or equal to about 2.6.

In another embodiment according to any of the previous embodiments, the fan delivers air into a bypass duct as propulsion air and into the compressor section as core air. A bypass ratio of the bypass air to the core air is greater than or equal to about 6.0.

In another embodiment according to any of the previous embodiments, the bypass ratio is greater than or equal to about 10.0.

In another embodiment according to any of the previous embodiments, the bypass air is greater than or equal to about 12.0.

These and other features may be best understood from the following drawings and specification.

### BRIEF DESCRIPTION OF THE DRAWINGS

Figure 1 schematically shows a gas turbine engine.
Figure 2 shows bearing compartment locations as may be found on the geared gas turbine engine of Figure 1.
Figure 3 shows a first type of seal.
Figure 4 shows a location of a seal.
Figure 5 shows a second type of seal.
Figure 6 shows details of an embodiment.

### DETAILED DESCRIPTION

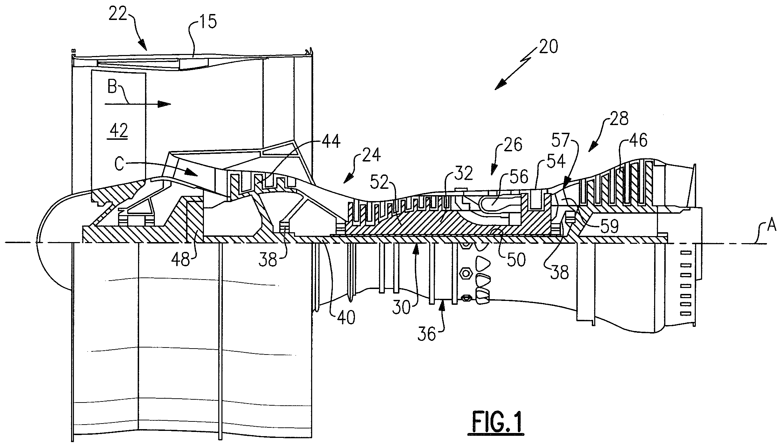

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

In such a geared gas turbine engine, there are more bearing compartments than there were found in the direct drive gas turbine engine. In addition, the bearing compartments, particularly as associated with a gear reduction, become critical. It is important to ensure that oil is maintained in the bearing compartments

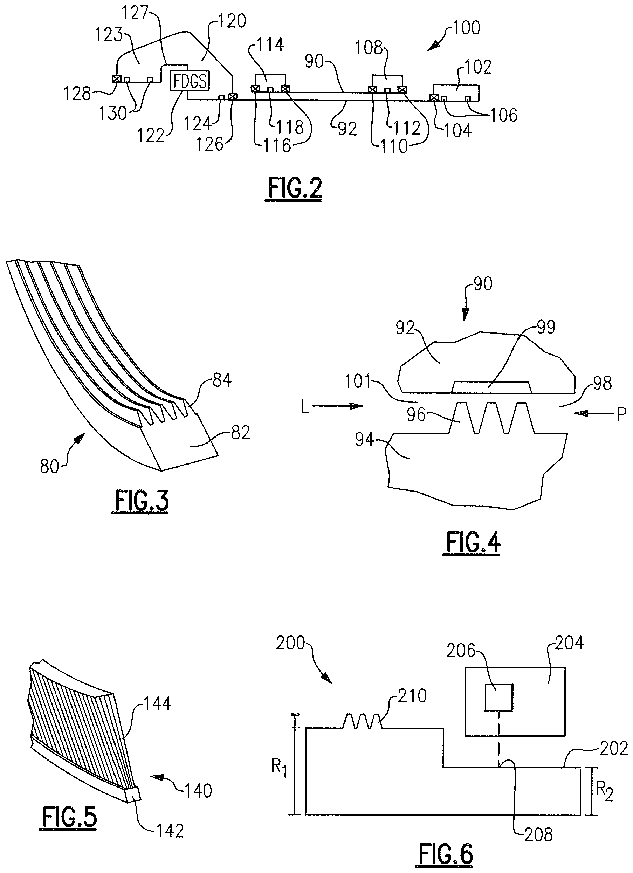

As shown in Figure 2, several bearing compartments 100 associated with a gas turbine engine, such as the gas turbine engine 20 illustrated in Figure 1, include seals. A bearing compartment 102 is associated with a low speed shaft 92 at a location associated with the low pressure turbine. Bearings 106 are shown schematically as is a seal 104.

A bearing compartment 108 is associated with the high speed rotor 90 and the high pressure turbine of Figure 1. Bearing compartment 108 includes seals 110 at each axial end and a central bearing 112.

A second bearing compartment 114 is also associated with the high speed rotor 90 and the high pressure compressor and includes a bearing 118 and seals 116.

Finally, a third bearing compartment 120/123 is associated with a fan drive gear system 122, or the gear reduction of Figure 1. The third bearing 120/123 compartment is also associated with a fan bearing 130, forward of the fan drive gear system 122. Seals 126 and 128 mechanically seal axial ends of the bearing compartment 120/123 and are associated with a fan rotor 127 and the low speed rotor 92. Seals 126 and 128 are also respectively associated with bearings 124 and 130 that are positioned within the bearing compartment 120/123.

The locations of the seals and the bearing compartments, as mentioned above, are exemplary and this disclosure extends to any number of other bearing component locations.

In the past, particular types of seals have been provided in a geared gas turbine engine. Contact seals have been utilized and complex non-contact seals have been proposed. While these seals may operate efficiently, they are prone to wear and must be repaired or replaced periodically. Replacing these seals may require shut down of the engine, which is undesirable.

Thus, a labyrinth seal 80, such as shown in Figure 3, may be utilized. In a labyrinth seal, a base 82 has knife edges 84. The Figure 3 embodiment has the knife edges 84 associated with a static component. That is, base 82 may be fixed to housing structure

Figure 4 shows an embodiment 90 where the knife edges 96 are associated with a shaft 94, which is positioned inwardly and facing a static structure 92. It should be understood that this disclosure extends to labyrinth seals 90 which rotate (Figure 4) or are associated with the static structure (Figure 3).

A wear surface 99 is positioned to face the knife edges 96 as shown in Figure 4. In some applications, it may be ensured that there is a gap between the radial extent of the knife edges and wear surfaces 99, such that there is no wear. However, it is also known to include an abradable material at surface 99. As shown schematically, lubricant L from a portion 101 of the bearing chamber may tend to flow outwardly of the bearing chamber portion 101. The knife edges 96 resist this flow. A supply of pressurized air P is supplied to a chamber 98 to further assist in resisting this lubricant flow, as would be understood by one of ordinary skill.

Labyrinth seals provide benefits, particularly, when utilized in a geared gas turbine engine.

In embodiments, there are at least two knife edges associated with the seal. The knife edges may have different diameters.

Figure 5 shows an alternative seal 140 which may be a brush seal. In a brush seal 140, a ring 142 secures a plurality of brush bristles 144. These brush bristles provide a seal much like the knife edges 96, as would be appreciated by one of ordinary skill.

Speaking generically, the illustrated seal 80 is a seal member having a plurality of distinct sealing members 84 extending towards a facing surface.

Figure 6 shows an engine 200 having a rotating shaft 202. A labyrinth seal 210 may be associated with a bearing compartment. A location 208 of the shaft 202 may be defined as being in a plane of a fuel nozzle 206 of a combustor 204. A radius R₁ may be defined to the outer tip of the knife edges at labyrinth seal 210. A second radius R₂ is defined at portion 208.

In embodiments, R₁ may be less than or equal to about twice R₂. Further, R₁ may be less than or equal to about one and three quarters (1.75) R₂. In the prior art, labyrinth seals have typically been much larger.

A gas turbine engine incorporating seals, such as disclosed in this application, may be provided in an engine with a bypass ratio greater than or equal to about 12. A gear ratio for gear reduction 122 may be greater than or equal to about 2.6.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (20; 200) comprising:
a fan (42), a compressor section (24), a turbine section (28), and a gear reduction (48) for driving said fan (42) through said turbine section (28);
a rotating element (90; 92; 94, 202) and at least one bearing compartment (102; 108; 114; 120/123) including a bearing for supporting said rotating element (90; 92; 94, 202), a seal (104; 110; 116; 126, 128; 80, 90; 200) for resisting leakage of lubricant outwardly of said bearing compartment (102; 108; 114; 120/123), and for allowing pressurized air to flow from a chamber adjacent said seal (104; 110; 116; 126, 128; 80, 90; 200) into the bearing compartment (102; 108; 114; 120/123); and
said seal (104; 110; 116; 126, 128; 80, 90; 200) having a plurality of sealing members extending radially toward a sealing surface;
**characterised in that**:
one of said at least one bearing compartment (120/123) is associated with said gear reduction (48) and said fan (42).

2. The gas turbine engine as set forth in claim 1, wherein said seal (80; 90) is a labyrinth seal having a plurality of knife edges (84; 96; 210).

3. The gas turbine engine as set forth in claim 2, wherein a first radius (R₁) is defined to a radial extent of said knife edges (210) and a second radius (R₂) is defined on a drive shaft (202) associated with said fan drive turbine at a location in a plane defined by a fuel nozzle (206) in a combustor (204) in said gas turbine engine (20), and a diameter ratio of said first radius to said second radius is less than or equal to about 2.0.

4. The gas turbine engine as set forth in claim 3, wherein said diameter ratio is less than or equal to about 1.75.

5. The gas turbine engine as set forth in claim 1, wherein said seal (140) is a brush seal.

6. The gas turbine engine as set forth in any preceding claim, wherein said at least one bearing compartment further includes a bearing compartment (114) associated with a compressor rotor (90).

7. The gas turbine engine as set forth in any preceding claim, wherein said at least one bearing compartment further includes a bearing compartment (102; 108) associated with a turbine rotor in said turbine section (28).

8. The gas turbine engine as set forth in any preceding claim, wherein said gear reduction (48) has a gear ratio greater than or equal to about 2.6.

9. The gas turbine engine as set forth in any preceding claim, wherein said fan (42) delivers air into a bypass duct as propulsion air and into said compressor section as core air and a bypass ratio of said bypass air to said core air is greater than or equal to about 6.0.

10. The gas turbine engine as set forth in claim 9, wherein said bypass ratio is greater than or equal to about 10.0.

11. The gas turbine engine as set forth in claim 10, wherein said bypass ratio is greater than or equal to about 12.0.

## Patentansprüche

1. Gasturbinenmotor (20; 200), Folgendes umfassend:
ein Gebläse (42), einen Kompressorbereich (24), einen Turbinenbereich (28) und eine Untersetzung (48) zum Antreiben des Gebläses (42) durch den Turbinenbereich (28);
ein Drehelement (90; 92; 94, 202) und mindestens ein Lagergehäuse (102; 108; 114; 120/123), beinhaltend ein Lager zum Stützen des Drehelements (90; 92; 94, 202), eine Dichtung (104; 110; 116; 126, 128; 80, 90; 200), um einem Auslaufen von Schmiermittel aus dem Lagergehäuse (102; 108; 114; 120/123) nach außen entgegenzuwirken und um es unter Druck stehender Luft zu erlauben, aus einer an die Dichtung (104; 110; 116; 126, 128; 80, 90; 200) angrenzenden Kammer in das Lagergehäuse (102; 108; 114; 120/123) zu strömen; und
wobei die Dichtung (104; 110; 116; 126, 128; 80, 90; 200) eine Vielzahl von Dichtungselementen aufweist, die sich radial zu einer Dichtungsfläche hin erstrecken;
**dadurch gekennzeichnet, dass**:
eines des mindestens einen Lagergehäuses (120/123) mit der Untersetzung (48) und dem Gebläse assoziiert ist (42).

2. Gasturbinenmotor nach Anspruch 1, wobei die Dichtung (80; 90) eine Labyrinthdichtung ist, die eine Vielzahl von Messerkanten (84; 96; 210) aufweist.

3. Gasturbinenmotor nach Anspruch 2, wobei ein erster Radius (R₁) an einem radialen Ausmaß der Messerkanten (210) definiert ist und ein zweiter Radius (R₂) auf einer Antriebswelle (202) definiert ist, die mit der Gebläseantriebsturbine an einer Stelle in einer Ebene assoziiert ist, die durch eine Kraftstoffdüse (206) in einer Brennkammer (204) in dem Gasturbinenmotor (20) definiert ist, und wobei ein Durchmesserverhältnis des ersten Radius zu dem zweiten Radius kleiner oder gleich etwa 2,0 ist.

4. Gasturbinenmotor nach Anspruch 3, wobei der Durchmesseverhältnis kleiner oder gleich etwa 1,75 ist.

5. Gasturbinenmotor nach Anspruch 1, wobei die Dichtung (140) eine Bürstendichtung ist.

6. Gasturbinenmotor nach einem der vorstehenden Ansprüche, wobei das mindestens eine Lagergehäuse ferner ein Lagergehäuse (114) beinhaltet, das mit einem Kompressorrotor (90) assoziiert ist.

7. Gasturbinenmotor nach einem der vorstehenden Ansprüche, wobei das mindestens eine Lagergehäuse ferner ein Lagergehäuse (102; 108) beinhaltet, das mit einem Turbinenrotor in dem Turbinenbereich (28) assoziiert ist.

8. Gasturbinenmotor nach einem der vorstehenden Ansprüche, wobei die Untersetzung (48) ein Übersetzungsverhältnis größer oder gleich etwa 2,6 aufweist.

9. Gasturbinenmotor nach einem der vorstehenden Ansprüche, wobei das Gebläse (42) Luft in eine Umgehungsleitung als Antriebsluft und in den Kompressorbereich als Kernluft liefert und wobei ein Umgehungsverhältnis der Umgehungsluft zu der Kernluft größer oder gleich etwa 6.0 ist.

10. Gasturbinenmotor nach Anspruch 9, wobei das Umgehungsverhältnis größer oder gleich etwa 10,0 ist.

11. Gasturbinenmotor nach Anspruch 10, wobei die Umgehungsverhältnis größer oder gleich etwa 12,0 ist.

## Revendications

1. Moteur à turbine à gaz (20 ; 200) comprenant :
un ventilateur (42), une section de compresseur (24), une section de turbine (28), et une démultiplication (48) pour entraîner ledit ventilateur (42) par l'intermédiaire de ladite section de turbine (28) ;
un élément rotatif (90 ; 92 ; 94, 202) et au moins un compartiment de palier (102 ; 108 ; 114 ; 120/123) incluant un palier pour supporter ledit élément rotatif (90 ; 92 ; 94, 202), un joint d'étanchéité (104 ; 110 ; 116 ; 126, 128 ; 80, 90 ; 200) pour empêcher une fuite de lubrifiant vers l'extérieur dudit compartiment de palier (102 ; 108 ; 114 ; 120/123), et pour permettre à de l'air sous pression de s'écouler depuis une chambre adjacente audit joint d'étanchéité (104 ; 110 ; 116 ; 126, 128 ; 80, 90 ; 200) dans le compartiment de palier (102 ; 108 ; 114 ; 120/123) ; et
ledit joint d'étanchéité (104 ; 110 ; 116 ; 126, 128 ; 80, 90 ; 200) ayant une pluralité d'éléments d'étanchéité s'étendant radialement en direction d'une surface d'étanchéité ; **caractérisé en ce que** :
l'un desdits au moins un compartiment de palier (120/123) est associé à ladite démultiplication (48) et audit ventilateur (42) .

2. Moteur à turbine à gaz selon la revendication 1, dans lequel ledit joint d'étanchéité (80 ; 90) est un joint d'étanchéité labyrinthe ayant une pluralité de bords vifs (84 ; 96 ; 210).

3. Moteur à turbine à gaz selon la revendication 2, dans lequel un premier rayon (R₁) est défini jusqu'à une limite radiale desdits bords vifs (210) et un deuxième rayon (R₂) est défini sur un arbre d'entraînement (202) associé à ladite turbine d'entraînement de ventilateur en un emplacement dans un plan défini par une buse de carburant (206) dans une chambre de combustion (204) dans ledit moteur à turbine à gaz (20), et un rapport de diamètre entre ledit premier rayon et ledit deuxième rayon est inférieur ou égal à environ 2,0.

4. Moteur à turbine à gaz selon la revendication 3, dans lequel ledit rapport de diamètre est inférieur ou égal à environ 1,75.

5. Moteur à turbine à gaz selon la revendication 1, dans lequel ledit joint d'étanchéité (140) est un balai d'étanchéité.

6. Moteur à turbine à gaz selon l'une quelconque des revendications précédentes, dans lequel ledit au moins un compartiment de palier inclut en outre un compartiment de palier (114) associé à un rotor de compresseur (90).

7. Moteur à turbine à gaz selon l'une quelconque des revendications précédentes, dans lequel ledit au moins un compartiment de palier inclut en outre un compartiment de palier (102 ; 108) associé à un rotor de turbine dans ladite section de turbine (28).

8. Moteur à turbine à gaz selon l'une quelconque des revendications précédentes, dans lequel ladite démultiplication (48) a un rapport de transmission supérieur ou égal à environ 2,6.

9. Moteur à turbine à gaz selon l'une quelconque des revendications précédentes, dans lequel ledit ventilateur (42) distribue de l'air dans un conduit de dérivation sous forme d'air de propulsion et dans ladite section de compresseur sous forme d'air central et un rapport de dérivation entre ledit air de dérivation et ledit air central est supérieur ou égal à environ 6,0.

10. Moteur à turbine à gaz selon la revendication 9, dans lequel ledit rapport de dérivation est supérieur ou égal à environ 10,0.

11. Moteur à turbine à gaz selon la revendication 10, dans lequel ledit rapport de dérivation est supérieur ou égal à environ 12,0.
